# EUROPEAN PATENT SPECIFICATION

(11) **EP 2 158 523 B1**
(45) Date of publication and mention of the grant of the patent: **31.07.2019**
(21) Application number: 08768223.3
(22) Date of filing: 06.06.2008
(51) Int. Cl.: G05B 11/01, B25F 5/00

(54) **MULTIPLEXING FUNCTIONALITIES IN A SINGLE CHANNEL OF A MICROCONTROLLER**
MULTIPLEXFUNKTIONEN IN EINEM EINZELKANAL EINER MIKROSTEUERUNG
MULTIPLEXAGE DE FONCTIONNALITÉS DANS UN CANAL UNIQUE D'UN MICROCONTRÔLEUR

(30) Priority: 15.06.2007 US 944127 P
(43) Date of publication of application: 03.03.2010
(73) Proprietor: Black & Decker, Inc., Newark, DE 19711 (US)
(72) Inventor: BROTTO, Daniele, Baltimore, MD 21234 (US); CUNANAN, Regina, G.C., Parkville, MD 21234 (US); TRINH, Danh, Parkville, MD 21234 (US)
(74) Representative: SBD IPAdmin
(86) International application number: PCT/US2008/007150
(87) International publication number: WO 2008/156567

(56) References cited:
- US-A- 5 945 803
- US-A1- 2003 075 540
- ARENS ET AL.: 'Demand Response Enabling Technology Development, Phase I Report' PROGRESS REPORT, UNIVERSITY OF CALIFORNIA, BERKELEY, [Online] XP008130598 Retrieved from the Internet: <URL:http://www.cybercut.berkeley.edu/DR/dr eam/reports/phaseI.pdf>

## Description

### FIELD

The present disclosure generally relates to cordless power tool trigger switches and relates in particular to operable connection of a temperature sensor and a microcontroller for use in a tool trigger switch.

### BACKGROUND

The statements in this section merely provide background information related to the present disclosure and may not constitute prior art.

Incorporating a microcontroller in the trigger switch of cordless tools can increase functionality by enabling monitoring parameters such as FET current, FET temperature, and battery voltage. Furthermore, it can allow addition of tool authentication through the battery's third terminal by adding code that can distinguish types of battery packs being used in the tool and then acting accordingly.

US2003/0075540 discloses a control system having all of the features in the precharacterizing portion of claim 1.

US5945803 discloses an apparatus for determining battery pack temperature and identity.

### SUMMARY

A control system for use with a cordless power tool having a trigger switch includes a microcontroller having an analog I/O pin and a pin I/O driver driving the pin to high output and low output, and setting the pin to high impedance input. A temperature sensor connected to the analog I/O pin is comprised of a thermistor disposed proximate to a heat source to be measured, with a capacitor connected in parallel with the thermistor. A control module of the microcontroller measures and records temperature of the heat source by first setting the analog I/O pin high, waiting a predetermined amount of time for the capacitor to charge, setting the analog I/O pin to high impedance input, taking the temperature reading, and storing the temperature reading in a computer readable medium.

Accordingly there is provided a control system in accordance with claim 1 and a method in accordance with claim 7.

Further areas of applicability will become apparent from the description provided herein. It should be understood that the description and specific examples are intended for purposes of illustration only and are not intended to limit the scope of the present disclosure.

### DRAWINGS

The drawings described herein are for illustration purposes only and are not intended to limit the scope of the present disclosure in any way.Figure 1 is a perspective view illustrating a system of power tools.Figure 2 is an electrical circuit diagram illustrating an electrical circuit for a cordless power tool trigger switch.Figure 3 is a functional block diagram illustrating a cordless power tool trigger switch system. Figure 4 is a flow diagram illustrating a method of operation for a cordless power tool trigger switch.

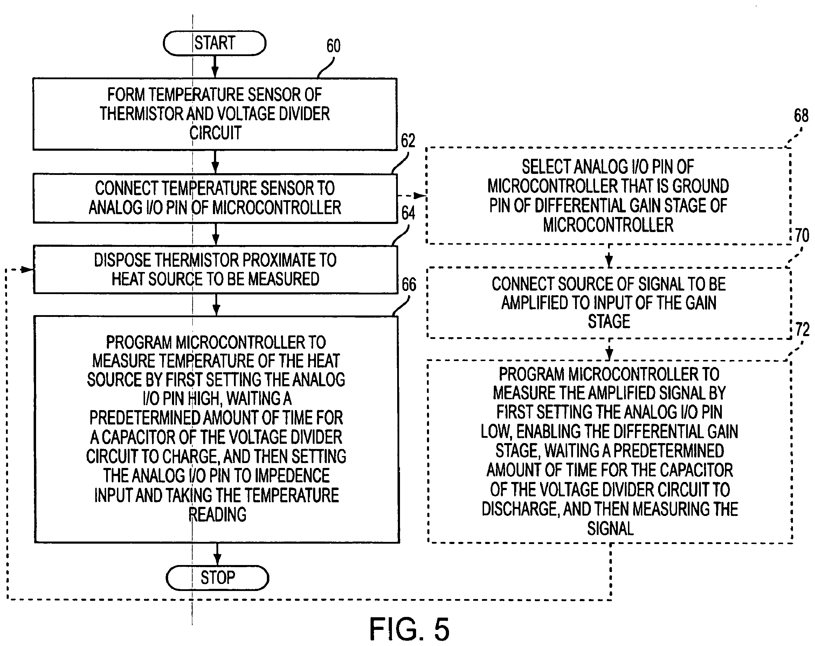

Figure 5 is a flow diagram illustrating a method of manufacture for use with manufacturing a cordless power tool trigger switch.

The drawings described herein are for illustration purposes only and are not intended to limit the scope of the present disclosure in any way.

### DETAILED DESCRIPTION

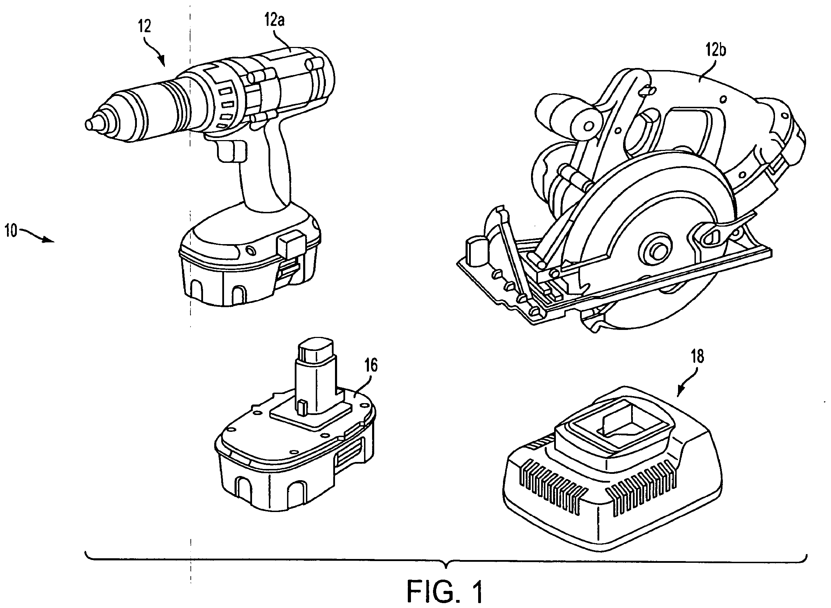

The present disclosure can relate to a system of power tools of the type that is generally indicated by reference numeral 10 in Figure 1. The system of power tools 10 can include, for example, one or more power tools 12, a battery pack 16 and a battery pack charger 18. Each of the power tools 12 can be any type of power tool, including without limitation drills, drill/drivers, hammer drill/drivers, rotary hammers, screwdrivers, impact drivers, circular saws, jig saws, reciprocating saws, band saws, cut-off tools, cut-out tools, shears, sanders, vacuums, lights, routers, adhesive dispensers, concrete vibrators, lasers, staplers and nailers. In the particular example provided, the system of power tools 10 includes a first power tool 12a and a second power tool 12b. For example, the first power tool 12a can be a drill/driver similar to that which is described in U.S. Patent No. 6,431,289, while the second power tool 12b can be a circular saw similar to that which is described in U.S. Patent No. 6,996,909. The battery pack 16 can be selectively removably coupled to the first and second power tools 12a and 12b to provide electrical power thereto. Except as otherwise described herein, the battery pack 16 can be configured in a manner that is similar to that which is described in U.S. Patent Application Publication No. 2006/0096771. The battery pack 16 can also be selectively electrically coupled to the battery pack charger 18 to charge the battery pack 16. Except as otherwise described herein, the battery pack charger 18 can be configured in a manner that is similar to that which is described in U.S. Patent Application No. 11/553,355.

One objective is to use a low-cost microcontroller with the smallest pin count (ex. 8-pin, small package) since size can be a concern in the space-limited trigger switch circuit. In order to use an 8-pin microcontroller, functionalities need to be combined in one pin because of the low pin count and the limited number of analog signals it can sense. Presented below is a method for sensing FET current and FET temperature by multiplexing two functionalities into one pin.

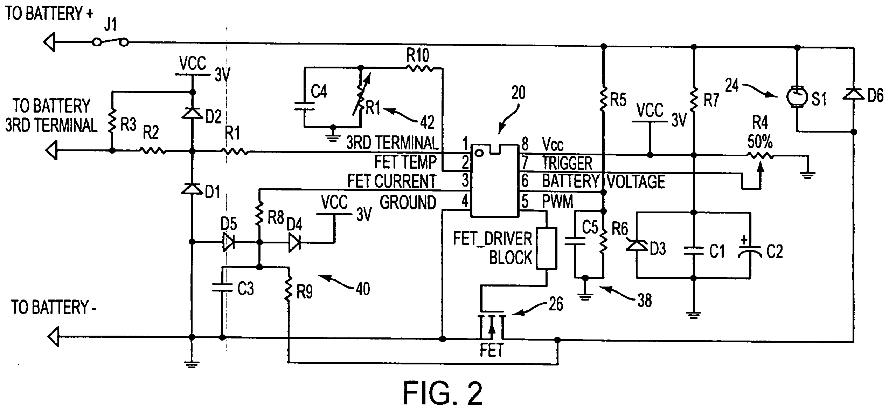

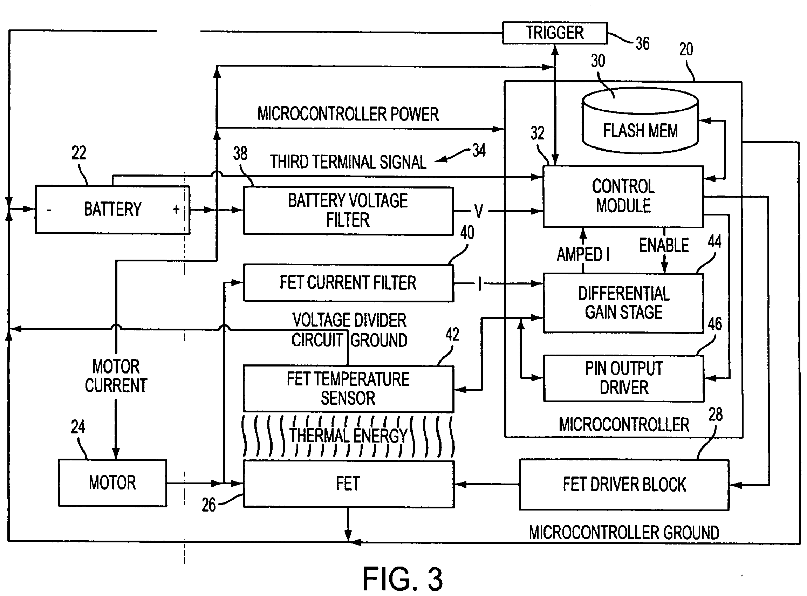

Turning now to Figures 2 and 3 and referring generally thereto, a method to use one pin for multiple functions is drawn in the electrical circuit. FET current and FET temperature can be measured through the method described below.

The 8-pin microcontroller 20 has six input/output channels, with four of them having the ability to take analog signals (non-logic). The 4 parameters needed to be connected to analog input pins are FET current, FET temperature, 3^{rd} terminal and trigger output. The other two functions are the PWM output pin (digital output) and battery voltage.

Microcontroller 20 can sense a battery type of battery 22, and select an appropriate one of plural sets of predefined operational parameters stored, for example, in a flash memory 30 internal to microcontroller 20. Control module 32 of microcontroller 20 can determine the battery type by information received or sensed using third terminal signal 34 from a battery third terminal. In some embodiments, control module 32 can receive and understand a digital data signal received over the third terminal connection.

During operation of a tool operably coupled to the battery pack, microcontroller 20 operates FET driver block 28 to affect operation of FET 26. Control module 32 can employ the selected set of operational parameters, together with other variable inputs, to operate the FET driver block 28. The other variable inputs can include a signal from user operated trigger 36 and a sensed voltage level V of battery 22 as filtered by battery voltage filter 38. Additional variable inputs can include FET current I as filtered by FET current filter 40 and FET temperature as sensed by FET temperature sensor 42.

For illustration purposes, measurement of FET current is described in the context of an ATMEL ATiny15L microcontroller. This microcontroller internally incorporates a differential gain stage that can amplify an analog voltage which is then read by an analog to digital converter internal to the microcontroller. When the microcontroller gain stage is activated, the differential voltage between pin 2 and pin 3 is amplified and presented to be read by the internal analog to digital converter. Pin 3 of the microcontroller is the non-inverting input of the gain stage while pin 2 is the inverting input so the voltage presented to the gain stage is effectively the voltage on pin 3 minus the voltage on pin 2. It is readily understood that other types of microcontrollers fall within the scope of this disclosure.

In this exemplary embodiment, a voltage is generated across FET 26 when current is flowing through it due to the RDSon of the FET. That voltage is fed to the gain stage non-inverting pin 3 via serial resistors R9 and R8. The voltage across FET 26 needs to be referenced to ground in order for the gain stage to accurately reflect the current across FET 26, thus the inverting input on pin 2 must be at ground level. One way to accomplish this is to hard connect pin 2 to ground however that would disallow the desired secondary use of the general purpose digital input/output and analog input capabilities of the port pin.

In another approach, the microcontroller can accomplish this ground reference by setting pin 2 to an output low. Alternately, pin 2 may be set to high impedance followed by a delay to insure C4 is completely discharged. In either case, the inverting input of the gain stage is at ground potential allowing for an accurate measurement of the current flowing through FET 26. Thus the microcontroller can effect a ground reference at the inverting input of the gain stage and yet maintain additional functionality to effect a temperature reading for temperature sensor Rt 42 as described below.

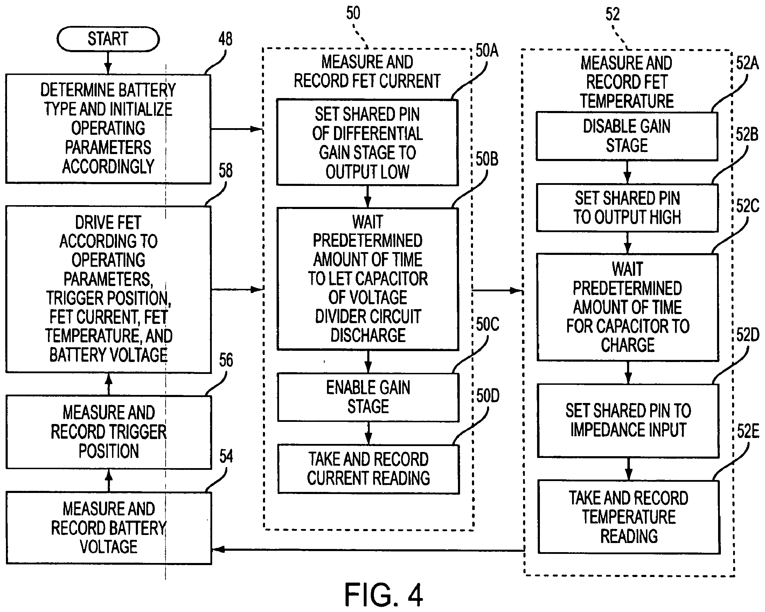

Turning now to Figure 4, the microcontroller, at startup, determines the battery type and initializes the operating parameters accordingly at step 48. Then the microcontroller measures and records the FET current at step 50, and measures and records the FET temperature at step 52. The microcontroller measures and records the battery voltage at step 54, and measures and records the trigger position at step 56. Then the microcontroller can drive the FET according to the operating parameters, the trigger position, the FET current, the FET temperature, and the battery voltage at step 58.

Referring generally now to Figures 2-4, inputs to the differential gain stage 44 are Pin 2 (grounded) and Pin 3, which is the FET current signal I to be amplified. At step 50A, Pin 2 can be set to output low to make sure that capacitor C4 is discharged and at signal ground after a predetermined amount of time is allowed to pass at step 50B. Then, the gain amplifier stage 44 can be enabled at step 50C, and FET current can be measured and recorded at step 50D.

When it comes to measuring FET temperature at step 52, the gain amplifier stage is first disabled at step 52A. Then, pin 2 can be set to output high at step 52B to charge C4. After a predetermined amount of time has passed to let the capacitor charge at step 52C, the output of pin 2 can then be switched to high impedance input at step 52D to take and record an A/D reading at step 52E. The reading can be taken immediately after releasing pin 2 from output high since the voltage from capacitor C4 will discharge through the measurement circuit coupled to pin 2 of the microcontroller.

In some embodiments, FET current and temperature are only measured one at a time since pin 2 is serving multiple functions. Since pin 2 is shared in this case, to take a FET temperature reading, either the current has to be turned off in a short amount of time or no FET current measurements are monitored in that short time frame. However, it should be understood that the FET temperature sensor and operation thereof can be employed in other contexts, and with or without a current reading, and with or without a differential gain stage. In particular, moving the FET temperature sensor to its own pin and driving that pin to take the readings intermittently can result in a significant power savings over prior construction and placement of the temperature sensor in these and other applications.

Turning now to Figure 5, an intelligent switch control apparatus can be made by first forming a temperature sensor of a voltage divider circuit at step 60, in which a thermistor divides the voltage and a capacitor is connected in parallel with the thermistor. Next, the temperature sensor can be connected to an analog I/O pin of a microcontroller at step 62. Also, the thermistor of the temperature sensor can be disposed proximate to a heat source to be measured at step 64. Finally, the microcontroller can be programmed at step 66 to measure temperature of the heat source by first setting the analog I/O pin high, then waiting a predetermined amount of time for the capacitor to charge, and then setting the analog I/O pin to high impedance input to take the temperature reading and store it in memory.

In additional or alternative embodiments, the method of making the intelligent switch control apparatus can further include selecting to connect the temperature sensor to an analog I/O pin of the microcontroller that is a ground pin of a differential, gain stage of the microcontroller at step 68. In this case, a source of a signal to be amplified can be connected to an input of the gain stage at step 70. Finally, the microcontroller can be programmed to measure the amplified signal at step 72 by setting the analog I/O pin low, enabling the gain stage, waiting a predetermined amount of time for the capacitor to discharge, and then measuring and recording a parameter of the amplified signal. In this case, step 66 can further include disabling the gain stage before taking the temperature reading.

For some embodiments, such as in the case of a switch for a cordless power tool, selecting the ground pin of the differential gain stage to be the pin for connecting the temperature sensor can be significant. In particular, it allows for use of a smaller microcontroller where a current needs to be amplified by the gain stage. This ability to use a smaller microcontroller can allow use of an intelligent switch with cordless power tools. Without this scheme of merging functionalities in a single channel, a larger microcontroller with more cost would have to be used (ex. 14-pin).

This scheme of merging functionalities can be significant for additional reasons. For example, it can be cost effective where it allows use of a lower cost 8-pin instead of a 14-pin microcontroller. Also, it can provide package size feasibility where the trigger switch circuit board is densely packed. In other words, using an 8-pin microcontroller can save board space over using a similar 14-pin microcontroller. Further, it can allow for straightforward assembly where 8-pin microcontroller packaging is similar to an 8-pin 555 timer already in use in some power tool trigger circuits. In other words, opting for a surface mount 14-pin microcontroller to add more functionality in the switch would complicate assembly due to the smaller pin spacing in the 14-pin micro controller.

The above description is merely exemplary in nature and is not intended to limit the present disclosure, application, or uses.

## Claims

1. A control system for use with a cordless power tool having a trigger switch, comprising:
a microcontroller (20) having an analog I/O pin (2) and a pin I/O driver driving the pin to high output and low output, and setting the pin to high impedance input;
a temperature sensor (42) connected to the analog I/O pin (2) and comprised of a thermistor (R1) disposed proximate to a heat source (26) to be measured, and a capacitor (C4) connected in parallel with the thermistor (R1); and
a control module (32) of said microcontroller (20) measuring and recording temperature of the heat source (26);
**characterized in that** the control module (32) of said microcontroller (20) is able to measure and to record the temperature of the heat source (26) by first setting the analog I/O pin (2) high, waiting a predetermined amount of time for the capacitor (C4) to charge, setting the analog I/O pin (2) to high impedance input, taking the temperature reading; wherein said microcontroller (20) further comprises a differential gain stage (44) with regard to which the analog I/O pin (2) serves as a ground pin, and said control module (32) is able to measure an amplified signal by setting the analog I/O pin (2) low, enabling a gain stage, waiting a predetermined amount of time for the capacitor C4) of the voltage divider circuit to discharge, making a measurement of a parameter of the amplified signal, and storing the measurement in the computer readable medium (30).

2. The system of claim 1, further comprising a FET driver block (28) responsive to control by said control module (32) to drive a FET (26), and said control module (32) is able to operate said FET driver block (28) to drive the FET (26) according to the temperature reading and the measurement, wherein the measurement is FET current.

3. The system of claim 2, wherein said control module (32) is further able to measure and to record voltage of a battery (22) supplying power to a motor (24) operated according to control of the FET (26), and said control module (32) is further able to operate said FET driver block (28) to drive the FET (26) according to the voltage of the battery (22).

4. The system of claim 2, wherein said control module (32) is further able to measure and to record a trigger position, and to operate said FET driver block (28) according to the trigger position.

5. The system of claim 2, wherein said control module (32) is further able to determine a battery type according to a signal received over a connection to a third terminal of a battery (22), to initialize operational parameters based on the battery type, and to operate the FET driver block (28) to drive the FET (26) according to the operational parameters.

6. The system of claim 1, wherein said control module (32) is able to disable the gain stage before taking the temperature reading.

7. A method of operation for use with a cordless power tool having a trigger switch, comprising:
measuring and recording temperature of a heat source by first setting (52C) an analog I/O pin (2) high of a microcontroller (32) of the trigger switch high, wherein the analog I/O pin (2) is connected to a temperature sensor (42) comprised of a thermistor (R1) disposed proximate to the heat source (26) and a capacitor (C4) connected in parallel with the thermistor (R1);
waiting (52D) a predetermined amount of time for the capacitor (C4) to charge;
setting (52D) the analog I/O pin (2) to high impedance input;
taking (52E) the temperature reading; and
storing the temperature reading in a computer readable medium (30); the method further comprising measuring an amplified signal by:
setting (50A) the analog I/O pin low;
enabling (50C) a gain stage (44) of the microcontroller (20) that employs the analog I/O pin (2) as a ground pin;
waiting (50B) a predetermined amount of time for the capacitor (C4) to discharge;
making (50D) a measurement of a parameter of the amplified signal; and
storing the measurement in the computer readable medium (30).

8. The method of claim 7, further comprising driving (58) a FET (26) according to the temperature reading and the measurement, wherein the measurement is FET current.

9. The method of claim 8, further comprising:
measuring and recording voltage of a battery supplying power to a motor (24) operated according to control of the FET (26); and
driving the FET (26) according to the voltage of the battery (22).

10. The method of claim 8, further comprising:
measuring and recording a trigger position; and
driving the FET (26) according to the trigger position.

11. The method of claim 8, further comprising:
determining a battery type according to a signal received over a connection to a third terminal of a battery (22);
initializing operational parameters based on the battery type; and
driving the FET (26) according to the operational parameters.

12. The method of claim 7, further comprising disabling the gain stage (44) before taking the temperature reading.

## Patentansprüche

1. Steuerungssystem zur Verwendung mit einem kabellosen Elektrowerkzeug, das einen Auslöseschalter aufweist, umfassend:
einen Mikrocontroller (20), der einen analogen I/O-Pin (2) und einen Pin-I/O-Treiber aufweist, der den Pin auf einen High-Ausgang und einen Low-Ausgang treibt, und den Pin auf einen High-Impedanz-Eingang setzt;
einen Temperatursensor (42), der mit dem analogen I/O-Pin (2) verbunden ist und aus einem Thermistor (R1), der nah an einer zu messenden Wärmequelle (26) angeordnet ist, und einem Kondensator (C4), der parallel geschaltet mit dem Thermistor (R1) verbunden ist, besteht; und
ein Steuerungsmodul (32) des Mikrocontrollers (20), das eine Temperatur der Wärmequelle (26) misst und aufnimmt;
**dadurch gekennzeichnet, dass** das Steuerungsmodul (32) des Mikrocontrollers (20) in der Lage ist, die Temperatur der Wärmequelle (26) zu messen und aufzunehmen, indem es zuerst den analogen I/O-Pin (2) auf High setzt, für eine vorbestimmte Zeitdauer zum Laden des Kondensators (C4) wartet, den analogen I/O-Pin (2) auf den High-Impedanz-Eingang setzt, und die Temperaturnahme vornimmt;
wobei der Mikrocontroller (20) weiter eine differentielle Gain-Stufe (44) umfasst, in Bezug auf welche der analoge I/O-Pin (2) als ein Masse-Pin dient, und das Steuerungsmodul (32) in der Lage ist, ein verstärktes Signal zu messen, indem es den analogen I/O-Pin (2) auf Low setzt, eine Gain-Stufe aktiviert, für eine vorbestimmte Zeitdauer zum Entladen des Kondensators (C4) der Spannungsteilerschaltung wartet, eine Messung eines Parameters des verstärkten Signals vornimmt, und die Messung in dem computerlesbaren Medium (30) speichert.

2. System nach Anspruch 1, weiter umfassend einen FET-Treiber-Block (28), der auf eine Steuerung durch das Steuerungsmodul (32) anspricht, um einen FET (26) zu treiben, und wobei das Steuerungsmodul (32) in der Lage ist, den FET-Treiber-Block (28) zu betreiben, um den FET (26) gemäß der Temperaturnahme und der Messung zu treiben, wobei die Messung ein FET-Strom ist.

3. System nach Anspruch 2, wobei das Steuerungsmodul (32) weiter in der Lage ist, eine Spannung einer Batterie (22) zu messen und aufzunehmen, die einen Motor (24) mit Strom versorgt, der gemäß einer Steuerung des FET (26) betrieben wird, und das Steuerungsmodul (32) weiter in der Lage ist, den FET-Treiber-Block (28) zu betreiben, um den FET (26) gemäß der Spannung der Batterie (22) zu treiben.

4. System nach Anspruch 2, wobei das Steuerungsmodul (32) weiter in der Lage ist, eine Auslöserposition zu messen und aufzunehmen, und den FET-Treiber-Block (28) gemäß der Auslöserposition zu betreiben.

5. System nach Anspruch 2, wobei das Steuerungsmodul (32) weiter in der Lage ist, einen Batterietyp gemäß eines Signals, das über eine Verbindung zu einem dritten Terminal einer Batterie (22) empfangen wird, zu bestimmen, um Betriebsparameter auf Grundlage des Batterietyps zu initialisieren, und den FET-Treiber-Block (28) zu betreiben, um den FET (26) gemäß der Betriebsparameter zu treiben.

6. System nach Anspruch 1, wobei das Steuerungsmodul (32) in der Lage ist, die Gain-Stufe zu deaktivieren, bevor es die Temperaturnahme vornimmt.

7. Verfahren zum Betrieb zur Verwendung mit einem kabellosen Elektrowerkzeug, das einen Auslöseschalter aufweist, umfassend:
Messen und Aufnehmen einer Temperatur einer Wärmequelle durch zuerst Setzen (52C) eins analogen I/O-Pins (2) eines Mikrocontrollers (32) des Auslöseschalters auf High, wobei der analoge I/O-Pin (2) mit einem Temperatursensor (42) verbunden ist, der aus einem Thermistor (R1), der nah an der Wärmequelle (26) angeordnet ist, und einem Kondensator (C4), der parallel geschaltet mit dem Thermistor (R1) verbunden ist, besteht;
Warten (52D) für eine vorbestimmte Zeitdauer zum Laden des Kondensators (C4);
Setzen (52D) des analogen I/O-Pins (2) auf einen High-Impedanz-Eingang;
Vornehmen (52E) der Temperaturnahme; und
Speichern der Temperaturnahme in einem computerlesbaren Medium (30); wobei das Verfahren weiter das Messen eines verstärkten Signals umfasst, durch:
Setzen (50A) des analogen I/O-Pins auf Low;
Aktivieren (50C) einer Gain-Stufe (44) des Mikrocontrollers (20), die den analogen I/O-Pin (2) als einen Masse-Pin einsetzt;
Warten (50B) für eine vorbestimmte Zeitdauer zum Entladen des Kondensators (C4);
Vornehmen (50D) einer Messung eines Parameters des verstärkten Signals; und
Speichern der Messung in dem computerlesbaren Medium (30).

8. Verfahren nach Anspruch 7, weiter umfassend ein Treiben (58) eines FET (26) gemäß der Temperaturnahme und der Messung, wobei die Messung ein FET-Strom ist.

9. Verfahren nach Anspruch 8, weiter umfassend:
Messen und Aufnehmen einer Spannung einer Batterie, die einen Motor (24) mit Strom versorgt, der gemäß einer Steuerung des FET (26) betrieben wird; und
Treiben des FET (26) gemäß der Spannung der Batterie (22).

10. Verfahren nach Anspruch 8, weiter umfassend:
Messen und Aufnehmen einer Auslöserposition; und
Treiben des FET (26) gemäß der Auslöserposition.

11. Verfahren nach Anspruch 8, weiter umfassend:
Bestimmen eines Batterietyps gemäß eines Signals, das über eine Verbindung zu einem dritten Terminal einer Batterie (22) empfangen wird;
Initialisieren von Betriebsparametern auf Grundlage des Batterietyps; und
Treiben des FET (26) gemäß der Betriebsparameter.

12. Verfahren nach Anspruch 7, weiter umfassend ein Deaktivieren der Gain-Stufe (44), bevor die Temperaturnahme vorgenommen wird.

## Revendications

1. Système de commande destiné à être utilisé avec un outil électrique sans fil ayant un commutateur de déclenchement, comprenant :
un microcontrôleur (20) ayant une broche analogique I/O (entrée/sortie) (2) et un dispositif d'entraînement I/O de broche entraînant la broche vers une sortie élevée et une sortie faible, et établissant la broche à une entrée d'impédance élevée ;
un capteur de température (42) connecté à la broche analogique I/O (2) et constitué d'une thermistance (R1) disposée à proximité d'une source de chaleur (26) à mesurer, et d'un condensateur (C4) connecté en parallèle à la thermistance (R1) ; et
un module de commande (32) dudit microcontrôleur (20) mesurant et enregistrant une température de la source de chaleur (26) ;
**caractérisé en ce que** le module de commande (32) dudit microcontrôleur (20) est capable de mesurer et d'enregistrer la température de la source de chaleur (26) en établissant tout d'abord la broche analogique I/O (2) à un niveau élevé, en attendant une quantité prédéterminée de temps pour que le condensateur (C4) se charge, en établissant la broche analogique I/O (2) à une entrée d'impédance élevée, en réalisant une lecture de la température ; dans lequel ledit microcontrôleur (20) comprend en outre un étage de gain différentiel (44) vis-à-vis duquel la broche analogique I/O (2) sert de broche de mise à la masse, et ledit module de commande (32) est capable de mesurer un signal amplifié en établissant la broche analogique I/O (2) à un niveau faible, en activant un étage de gain, en attendant une quantité prédéterminée de temps pour que le condensateur (C4) du circuit diviseur de tension se décharge, en effectuant une mesure d'un paramètre du signal amplifié, et en mémorisant la mesure dans le support lisible par ordinateur (30).

2. Système selon la revendication 1, comprenant en outre un bloc d'entraînement de FET (28) sensible à une commande par ledit module de commande (32) pour entraîner un FET (26), et ledit module de commande (32) est capable de faire fonctionner ledit bloc d'entraînement de FET(28) pour entraîner le FET(26) en fonction de la lecture de température et de la mesure, la mesure étant un courant de FET.

3. Système selon la revendication 2, dans lequel ledit module de commande (32) est en outre capable de mesurer et d'enregistrer une tension d'une batterie (22) alimentant en énergie un moteur (24) fonctionnant conformément à une commande du FET (26), et ledit module de commande (32) est en outre capable de faire fonctionner ledit bloc d'entraînement de FET (28) pour entraîner le FET (26) en fonction de la tension de la batterie (22).

4. Système selon la revendication 2, dans lequel ledit module de commande (32) est en outre capable de mesurer et d'enregistrer une position de déclenchement, et de faire fonctionner ledit bloc d'entraînement de FET (28) en fonction de la position de déclenchement.

5. Système selon la revendication 2, dans lequel ledit module de commande (32) est en outre capable de déterminer un type de batterie en fonction d'un signal reçu sur une connexion à une troisième borne d'une batterie (22), afin d'initialiser des paramètres opérationnels sur la base du type de batterie, et faire fonctionner le bloc d'entraînement de FET (28) afin d'entraîner le FET(26) en fonction des paramètres opérationnels.

6. Système selon la revendication 1, dans lequel ledit module de commande (32) est capable de désactiver l'étage de gain avant de réaliser une lecture de la température.

7. Procédé de fonctionnement destiné à être utilisé avec un outil électrique sans fil ayant un commutateur de déclenchement, comprenant les étapes consistant à :
mesurer et enregistrer une température d'une source de chaleur en établissant tout d'abord (52C) une broche analogique I/O (2) d'un microcontrôleur (32) du commutateur de déclenchement à un niveau élevé, dans lequel la broche analogique I/O (2) est connectée à un capteur de température (42) constitué d'une thermistance (R1) disposée à proximité de la source de chaleur (26) et d'un condensateur (C4) connecté en parallèle à la thermistance (R1) ;
attendre (52D) une quantité prédéterminée de temps pour que le condensateur (C4) se charge ;
établir (52D) la broche analogique I/O (2) à une entrée d'impédance élevée ;
effectuer (52E) une lecture de la température ; et
stocker la lecture de température dans un support lisible par ordinateur (30) ; le procédé comprenant en outre la mesure d'un signal amplifié en :
établissant (50A) la broche analogique I/O à un niveau faible ;
activant (50C) un étage de gain (44) du microcontrôleur (20) qui utilise la broche analogique I/O (2) comme broche de mise à la masse ;
attendant (50B) une quantité prédéterminée de temps pour que le condensateur (C4) se décharge ;
réalisant (50D) une mesure d'un paramètre du signal amplifié ; et
stockant la mesure dans le support lisible par ordinateur (30).

8. Procédé selon la revendication 7, comprenant en outre l'entraînement (58) d'un FET(26) en fonction de la lecture de température et de la mesure, la mesure étant un courant de FET.

9. Procédé selon la revendication 8, comprenant en outre :
la mesure et l'enregistrement d'une tension d'une batterie alimentant en énergie un moteur (24) fonctionnant conformément à une commande du FET (26) ; et
l'entraînement du FET (26) conformément à la tension de la batterie (22).

10. Procédé selon la revendication 8, comprenant en outre :
la mesure et l'enregistrement d'une position de déclenchement ; et
l'entraînement du FET (26) en fonction de la position de déclenchement.

11. Procédé selon la revendication 8, comprenant en outre :
la détermination d'un type de batterie en fonction d'un signal reçu sur une connexion à une troisième borne d'une batterie (22) ;
l'initialisation de paramètres opérationnels sur la base du type de batterie ; et
l'entraînement du FET (26) en fonction des paramètres opérationnels.

12. Procédé selon la revendication 7, comprenant en outre la désactivation de l'étage de gain (44) avant de réaliser une lecture de la température.
